# DEMANDE DE BREVET EUROPEEN

(11) **EP 1 378 611 A1**
(43) Date de publication de la demande: **07.01.2004**
(21) Numéro de dépôt: 03350004.2
(22) Date de dépôt: 24.06.2003
(51) Int. Cl.: E01H 1/04, B60P 1/48

(54) **Ensemble d'aspiration de poussieres destine a etre porte par un vehicule leger et vehicule equipe de cet ensemble**

(30) Priorité: 03.07.2002 FR 0208339
(71) Demandeur: Simoens, Hervé, 59700 Marcq en Baroeul (FR)
(72) Inventeur: Simoens, Hervé, 59700 Marcq en Baroeul (FR)
(74) Mandataire: Tournel, Jean Louis

(57) **Abrégé**

L'invention se rapporte un ensemble (1) d'aspiration de poussières destiné à être porté par un véhicule léger comprenant un volume (2) de stockage des poussières avec une évacuation par gravité ce volume étant suspendu à un dispositif (4) de manoeuvre,
lequel volume de stockage présentant, en partie basse, des parois (2A) convergentes vers un orifice (3) d'évacuation situé sous le volume,
le dispositif de manoeuvre (4) est articulé en un point bas (5) et il est mobile entre deux positions :
   . une position dite de transport où le volume de stockage surplombe le véhicule léger et
   . une position dite de vidange où le volume de stockage est en dehors de l'encombrement du véhicule léger.

## Description

L'invention se rapporte à un ensemble d'aspiration de poussières destiné à être porté par un véhicule léger.

Elle se rapporte également au véhicule équipé de cet ensemble d'aspiration de poussières.

Classiquement, pour aspirer périodiquement de la poussière, au lieu de disposer d'une installation fixe, on fait appel à une installation mobile.

Une telle installation comprend, donc, portés par un véhicule :
- un volume de stockage,
- un dispositif d'aspiration comprenant notamment une pompe et,
- un moyen moteur pour entraîner en rotation la dite pompe.

A ce jour, on connaît principalement des ensembles de grandes capacités portés par des camions qui ne peuvent être conduits que par des chauffeurs ayant obtenu un permis poids lourd.

Outre ce problème, l'encombrement de ces camions ne permet pas de se déplacer partout et oblige donc de faire appel à de longues conduites pour accéder à la zone à nettoyer et donc de disposer d'une pompe de forte capacité en raison des pertes de charge induites par la longueur des conduites.

On connaît un ensemble d'aspiration sur véhicule léger (FR-A-2.701.721) équipé d'un bras d'aspiration.

Le volume de stockage est disposé à l'arrière du véhicule et il est articulé sur le bord arrière en vue de le vider par gravité dans une fosse en soulevant l'avant du volume de stockage.

Il faut donc disposer d'une fosse pour stocker les poussières récupérées par la camionnette.

Pour effectuer cette opération de vidange, il faut que l'arrière du volume soit en porte à faux relativement important par rapport à l'articulation ce qui pose des problèmes de répartition des masses sur le véhicule.

L'invention se propose d'apporter une solution aux problèmes notamment évoqués ci-avant.

A cet effet, l'invention a pour objet un ensemble d'aspiration de poussières destiné à être porté par un véhicule léger comprenant, suspendu à un dispositif de manoeuvre, un volume de stockage des poussières présentant, en partie basse, des parois convergentes vers un orifice d'évacuation situé sous le volume pour une évacuation par gravité, cet ensemble d'aspiration étant caractérisé en ce que :

Le dispositif de manoeuvre est articulé en un point bas et il est mobile entre deux positions:
. une position dite de transport où le volume de stockage surplombe le véhicule léger et une position dite de vidange où le volume de stockage est en dehors de l'encombrement du véhicule léger.

L'invention a également pour objet le véhicule léger équipé de l'ensemble d'aspiration.

L'invention sera bien comprise à l'aide de la description ci-après faite à titre d'exemple non limitatif en regard du dessin ci-annexé qui représente schématiquement :

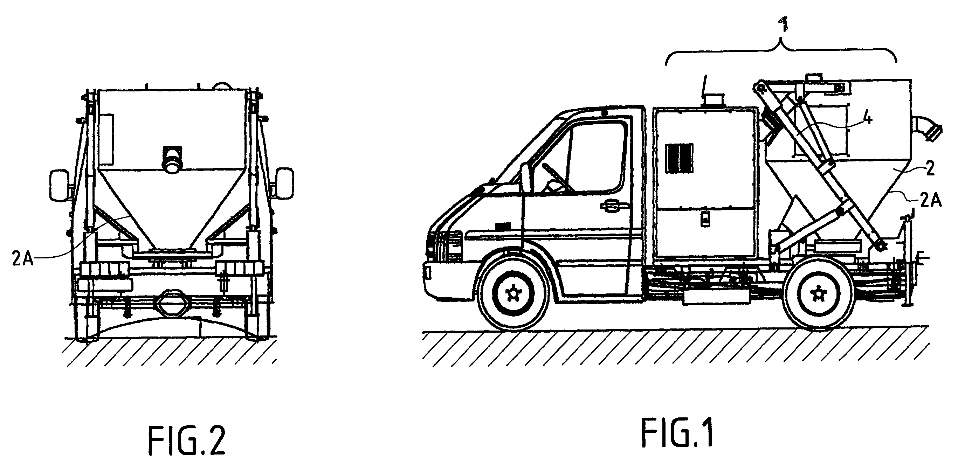

- figure 1 : vue de profil d'un véhicule léger équipé,
- figure 2 : vue de l'arrière d'un véhicule de la figure 1,

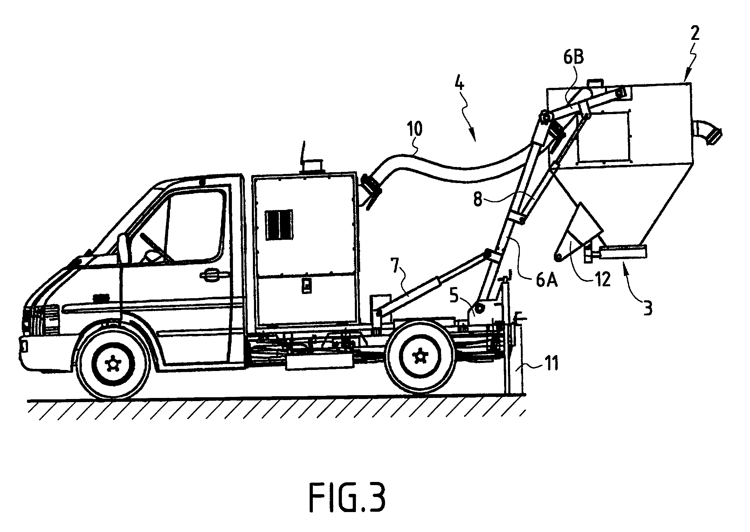

- figure 3 : vue du véhicule léger en position de vidange,

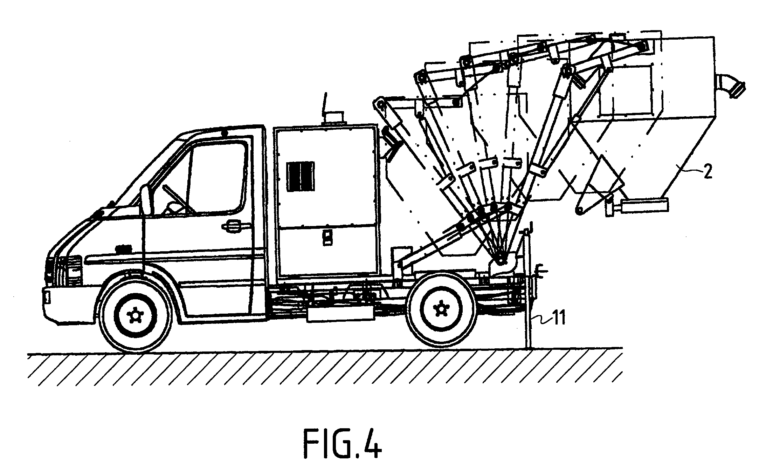

- figure 4 : cinématique du déplacement du volume de stockage.

En se reportant au dessin, on voit un ensemble 1 d'aspiration de poussières destiné à être porté par un véhicule léger comprenant un volume 2 de stockage des poussières avec une évacuation par gravité.

Par véhicule léger on comprendra les véhicules ne nécessitant pas de permis spéciaux pour la conduite.

En France il s'agit des véhicules de moins de trois tonnes cinq cent.

Bien évidemment, cet ensemble comprend une pompe d'aspiration et des filtres pour éviter que l'air rejeté ne contienne des poussières.

Est également prévu un moyen moteur pour entraîner en rotation la pompe d'aspiration.

Comme on peut le voir sur les différentes figures :
- le volume de stockage présente, en partie basse, des parois 2A convergentes vers un orifice 3 d'évacuation situé sous le volume et
- ce volume est suspendu à un dispositif 4 de manoeuvre articulé en un point bas 5 mobile entre deux positions :
   . une position dite de transport où le volume de stockage surplombe le véhicule léger et
   . une position dite de vidange où le volume de stockage est en dehors de l'encombrement du véhicule léger.

Il s'agit de l'encombrement du véhicule lorsque ledit volume de stockage est en position de transport.

Cette disposition permet de vider les poussières non pas obligatoirement dans une cuve enterrée dans le sol mais dans un bac dont les parois peuvent être au dessus du sol.

Il n'est pas nécessaire de venir positionner le véhicule au dessus d'une fosse.

Comme on peut le voir, le volume de stockage est positionné sensiblement au niveau de l'essieu arrière en sa position de transport.

Comme on peut le voir, le volume de stockage est délimité par un cylindre de révolution d'axe vertical pourvu à sa base d'une partie conique.

Bien évidemment, il pourrait s'agir d'un tronc de pyramide surmonté d'un cube.

Avantageusement, le dispositif 4 de manoeuvre comprend au moins un bras 6, lequel bras est constitué de deux tronçons 6A, 6B :
- l'un inférieur 6A articulé à sa base et
- l'autre supérieur 6B articulé sur le tronçon inférieur et sur le volume.

En position de transport, le tronçon inférieur 6A est incliné depuis l'arrière du véhicule vers l'avant tandis que le tronçon supérieur 6B est sensiblement horizontal.

Comme on peut le voir le tronçon inférieur 6A , en se déplaçant passe par une position intermédiaire où ce tronçon inférieur est vertical.

Déjà en cette position intermédiaire, le volume de stockage est quasiment en dehors de l'encombrement du véhicule.

Le simple déplacement du bras inférieur 6A permet de déplacer le volume de stockage en dehors de l'encombrement du véhicule.

Cette disposition des bras permet de rester dans l'encombrement du volume de stockage.

Des points d'appui supplémentaires permettent de stabiliser le véhicule lors de la manoeuvre.

Le tronçon inférieur est déplacé à l'aide d'un vérin 7 qui s'appuie sur le châssis du véhicule et sur le tronçon inférieur.

Le tronçon supérieur est déplacé à l'aide d'un vérin 8 qui s'appuie sur le tronçon inférieur et le tronçon supérieur.

Ainsi, on peut augmenter la hauteur à laquelle se situe le volume en position de vidange, en modifiant l'orientation du tronçon supérieur par rapport au plan d'appui du véhicule, sans augmenter la hauteur du véhicule lors de ses déplacements.

Dans l'exemple représenté, le dispositif de manoeuvre comprend deux bras 6 situés de part et d'autre du volume de stockage qui comprend alors deux tourillons 9 d'articulation situés notamment en partie supérieure cela sensiblement dans un plan passant par l'axe de gravité.

Bien évidemment, les tourillons pourraient être plus bas afin de lever plus haut le volume de stockage.

Dans l'exemple représenté, le volume de stockage est raccordé aux moyens d'aspiration par une conduite 10 suffisamment longue pour ne pas devoir être déconnectés lors des manoeuvres.

Toutefois, compte tenu de la cinématique et du déplacement du volume de stockage, on peut parfaitement prévoir que le morceau de conduite en forme de crosse porté par le volume vienne s'engager automatiquement dans une cavité reliée aux moyens d'aspiration.

On note la présence de moyens 11 d'appui supplémentaire au sol situés à l'arrière du châssis pour stabiliser le véhicule lors de la manoeuvre du volume. Le système de pompe est positionné entre la cabine et le volume de stockage.

Pour le transport, il est prévu de verrouiller le volume de stockage sur le châssis.

A cet effet, la partie basse du volume de stockage comprend au moins une patte 12 qui vient s'engager dans une chape, l'ensemble précité étant accouplé avec un verrou.

Afin d'utiliser le moteur du véhicule, ce dernier sera équipé d'une boite dite de coupure.

## Revendications

1. Ensemble (1) d'aspiration de poussières destiné à être porté par un véhicule léger comprenant un volume (2) de stockage des poussières avec une évacuation par gravité ce volume étant suspendu à un dispositif (4) de manoeuvre,
lequel volume de stockage présentant, en partie basse, des parois (2A) convergentes vers un orifice (3) d'évacuation situé sous le volume
cet ensemble étant **CARACTERISE en ce que** :
le dispositif de manoeuvre (4) est articulé en un point bas (5) et il est mobile entre deux positions :
. une position dite de transport où le volume de stockage surplombe le véhicule léger et
. une position dite de vidange où le volume de stockage est en dehors de l'encombrement du véhicule léger.

2. Ensemble d'aspiration de poussières selon la revendication 1 **caractérisé en ce que** le volume de stockage est délimité par un cylindre de révolution d'axe vertical pourvu à sa base d'une partie conique.

3. Ensemble d'aspiration de poussières selon la revendication 1 **caractérisé en ce que** le dispositif (4) de manoeuvre comprend au moins un bras (6), lequel bras est constitué de deux tronçons (6A, 6B):
- l'un inférieur (6A) articulé à sa base et
- l'autre supérieur (6B) articulé sur le tronçon inférieur et sur le volume.

4. Ensemble d'aspiration de poussières selon la revendication 3 **caractérisé en ce qu'**en position de transport, le tronçon inférieur (6A) est incliné depuis l'arrière du véhicule vers l'avant tandis que le tronçon supérieur (6B) est sensiblement horizontal.

5. Ensemble d'aspiration de poussières selon la revendication 3 **caractérisé en ce que** le tronçon inférieur est déplacé à l'aide d'un vérin (7) qui s'appuie sur le châssis du véhicule et sur le tronçon inférieur.

6. Ensemble d'aspiration de poussières selon la revendication 3 **caractérisé en ce que** le tronçon supérieur est déplacé à l'aide d'un vérin (8) qui s'appuie sur le tronçon inférieur et le tronçon supérieur.

7. Ensemble d'aspiration de poussières selon la revendication 3 ou 4 **caractérisé en ce que** le dispositif de manoeuvre comprend deux bras (6) situés de part et d'autre du volume de stockage qui comprend alors deux tourillons (9) d'articulation situés notamment en partie supérieure.

8. Ensemble d'aspiration de poussières selon la revendication 1 **caractérisé en ce que** le volume de stockage est raccordé aux moyens d'aspiration par une conduite (10) suffisamment longue pour ne pas devoir être déconnectés lors des manoeuvres.

9. Ensemble d'aspiration de poussières selon la revendication 1 **caractérisé en ce que** la partie basse du volume de stockage comprend au moins une patte (12) qui vient s'engager dans une chape, l'ensemble étant accouplé avec un verrou.

10. Véhicule équipé d'un ensemble d'aspiration de poussières selon l'une quelconque des revendications 1 à 9.
